(19) Europäisches Patentamt
European Patent Office
Office européen des brevets

(11) **EP 2 400 758 A1**

(12) **EUROPEAN PATENT APPLICATION**

(43) Date of publication:
**28.12.2011 Bulletin 2011/52**

(51) Int Cl.:
*H04N 7/26* (2006.01)    *H04N 7/50* (2006.01)
*G06T 7/00* (2006.01)    *H04N 17/00* (2006.01)

(21) Application number: **10305675.0**

(22) Date of filing: **24.06.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Alcatel Lucent**
**75007 Paris (FR)**

(72) Inventors:
 • **LEPROVOST, Yann**
  **91620, Nozay (FR)**

 • **KERBOEUF, Sylvaine**
  **91140, Villebon-sur-Yvette (FR)**
 • **HUBBE, Pascal**
  **75014, Paris (FR)**

(74) Representative: **ALU Antw Patent Attorneys**
 **Intellectual Property and Standards**
 **Copernicuslaan 50**
 **2018 Antwerp (BE)**

(54) **Method to Determine The Global Quality of a Video Stream**

(57)    A method for assessing the quality of an encoded video stream comprises the steps of performing measurements of said video stream for deriving therefrom a mean compression ratio parameter (P1) of the video stream, a time discontinuity impairment indicator (P2), a degraded frame impairment indicator (P3) related to packet losses during transmission of said encoded video, and a video activity parameter (P4), said mean compression ratio parameter (P1), said time discontinuity impairment indicator (P2), said degraded frame impairment indicator (P3) and said video activity parameter (P4) being further used to during calculation of a single quality metric (VQStotal) of which the resulting value is representative for the quality of said encoded video stream.

Fig. 1

**Description**

The present invention relates to a method to determine the quality of a video stream.

Known quality assessment techniques are based on a full reference video stream, implying that, at the receiver, both the decoded received video signal as well as the transmitted source or reference video signal are compared with each other. This is however not feasible on real deployed networks and systems and hence, such methods are restricted to laboratory tests.

Other techniques make use of a partial reference video stream, using a modified video source signal containing some markers for being compared to the decoded received signal at the receiver. Besides the fact that this method needs additional overhead by the addition of the markers to the source signal, it suffers from the same drawbacks as the previous methods using the full reference video stream.

Other existing tools only rely on the received video signal which is usually degraded.

Such measuring systems do not know the original signal, but only observe the degraded signal. Therefore often errors are made by considering that some received and decoded video blocks, while correctly being received and decoded, are yet erroneously being considered as affected by network impairments. This occurs especially at borders of objects while they did form part of the original content of a video scene.

It is thus an object of embodiments of the present invention to propose an improved method which does not show the inherent shortcomings of the prior art methods.

According to embodiments of the present invention this object is achieved by the method comprising the steps of performing measurements of said video stream for deriving therefrom a mean compression ratio parameter of the video stream, a time discontinuity impairment indicator related to network impairments during transmission of said encoded video , a degraded frame impairment indicator related to packet losses during transmission of said encoded video, and a video activity parameter, said mean compression ratio parameter, said time discontinuity impairment indicator, said degraded frame impairment indicator and said video activity parameter being further used during calculation of a single quality metric of which the resulting value is representative for the quality of said encoded video stream.

In this way a single quality metric being dependent on both intrinsic video property elements such as the compression ratio and the activity, but also on external video degradation effects due to network impairments and losses, is obtained.

In a first variant said measurements comprise the tracking, during at least one predetermined timing window ,of

- a compressed video frame size
- a frame resolution,
- an instantaneous frame display time ,
- a number of frames that are displayed longer than expected,
- a number of frames that are visually degraded,
- a motion vector .

These can all be obtained in a simple way, allowing the above mentioned parameters to be easily obtained as well.

In another variant said predetermined timing window corresponds to a timing window for receiving a predetermined number of encoded frames of said encoded video stream

This ensures the quality parameter is representative enough over a certain timing window.

In an embodiment said measurements are performed at a receiver, whilst in another embodiment said measurements are performed in an intermediate node between a transmitter and a receiver.

In another variant said single video quality metric is obtained by subtracting a first degradation term expressing a degradation of an intrinsic video quality measure from time discontinuity impairments and a second degradation term expressing a degradation of said intrinsic video quality measure from degraded frames from said intrinsic video quality measure parameter.

Said intrinsic video quality measure parameter can be a function of said mean compression ratio parameter and said video activity parameter, derived from said measurements of said video stream during several time windows, taking into account initial calibration values.

In some embodiments the method further comprises a step of calibrating said function via initial measurements on several test video sequences

The above and other objects and features of the invention will become more apparent and the invention itself will be best understood by referring to the following description of an embodiment taken in conjunction with the accompanying drawings wherein:

Fig1. shows a schematic of a video transmission channel between a transmitter and a receiver, wherein measurements are performed at a receiver as to illustrate one embodiment of the method,

Figs. 2a-b show flowcharts of different steps used for obtaining some further parameters used during in an embodiment for calculating the video quality metric.

It is to be remarked that the functions of the various elements shown in the figures., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

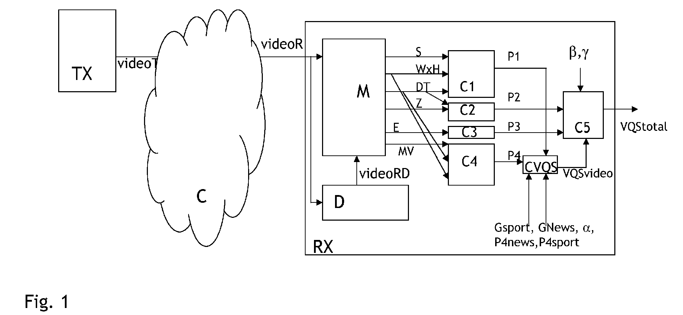

Fig. 1 depicts a transmitter TX transmitting an encoded video stream, denoted videoT, via a communications network C, which can be any type of mobile or fixed network, to a receiver RX. The received video stream videoR at the receiver may be degraded due to network errors such as. noise, congestion problems, crosstalk, network jitter etc.. It is the objective of embodiments of the method to determine a simple unique score , denoted VQStotal identifying the quality of this received video videoR taking into account as much as possible elements which contribute to the intrinsic video quality as well as to the degradation during transport, decoding etc..

To this purpose the received video stream videoR is decoded in a decoder D, resulting in a decoded received video stream denoted videoRD, and both the received videoR and decoded videoRD video streams are provided to a measurement device M, being adapted to measure the evolution as a function of time of the following metrics :

- a compressed video frame size S , expressed in number of bits. A typical value may for instance be 18200 bits, typical for a P-frame of a H.264 encoded video. This value is obtained from the received encoded video videoR,
- The frame resolution, expressed in number of pixels for the width W and the height H of a frame. This may vary over time. Typical values range between 176x144 to 1920 x 1080 pixels, depending on the standard used. Measurements e.g. W=320 pixels and H= 240 pixels are typically obtained from the decoded video videoRD,
- The display time DT of each frame, typically expressed in milliseconds e.g. 40 msec as corresponding to the inverse of the instantaneous frame rate, of which a typical average value is 25 frames per second displayed. As W and H are variable, the value of DT can vary over time too. This value is also obtained from the received encoded video, using e.g. RTP timestamps in accordance to the method described in the not yet published French patent application nr 1050849.
- A first boolean identifier Z to identify frames that are frozen, being frames that are displayed longer than expected. A value of 0 may be selected in case a frame is not frozen, and a value of 1 may be selected for a frozen frame.These frozen frames are due to impairments brought by the network or alternatively due to receiver buffer underflow events. A way to determine this identifier Z may be to observer the difference in display time between a current frame and a previous frame. In case this difference is larger than the average display time for a frame, as obtained from averaging all DT values over a measurement window, Z is attributed a "1" value. In case this difference is smaller or equal than the average display time, Z is attributed a "0" value.
- A second boolean identifier E to identify frames that are visually degraded due to packet loss, and/or due to failure of the video decoder because of an erroneous compressed bitstream. These latter errors may propagate up to the next key IDR-frame, which is intracoded, whereas all frames depending in this reference frame are intercoded with respect to this reference frame . To determine this boolean identifier E the packet number, e.g. RTP sequence number as can be found in the RTP header in case RTP / UDP/IP transmission protocol is used for the transport of the video information, can be extracted. If the sequence of these packet numbers indicate that the packets do arrive at the receiver in the correct order, it may be deduced that no such errors did occur. E may accordingly be assigned a value of 0 in case all packets constituting a frame, were arrived in the appropriate sequence, whereas a value of 1 may be assigned in case at least one artifact is present in the present frame. Furthermore some extra analysis may be required in case the frame under consideration was a reference frame, as, in case a reference I frame suffered from such errors, al B and P type frame referring to this reference frame will then also be impaired. This means that all B and P type frames, depending on the impaired reference frame, will also be attributed a "1" value for E. Identifier E is thus representative for video artifact propagation impairments ,brought by the network losses or by jitter such that a packet arriving too late in the receiving buffer will be lost for the decoder.

- a Motion vector MV for each frame, obtained by e.g. block matching motion estimation on the decoded video or by extracting the motion vectors from the encoded received video itself. An average value over all macroblocks over a frame will then result in the motion vector MV for this frame. A more eleborate way may also comprise performing standard motion vector determination techniques, e.g. via block matching, between current decoded frames and previous frames.

In a preferred embodiment these metrics are tracked during a predetermined time window. This time window may be fixed, or correspond to a number of received frames, which then can result in a varying time window.

From the measured values of these 6 metrics, average values over this time window of time size L (in seconds), including all frames Fi to Fi+N , are calculated. In order to avoid incomplete frames, the time size L can sometimes be made variable such as to only take into account completely received frames . The following average parameters are thereby obtained :

$$\begin{cases} FPSavg = \dfrac{1}{N}\sum_{j=i}^{i+N}\dfrac{1}{DT_j} \\[2ex] Bitrate = \dfrac{\sum_{j=i}^{i+N} S_j}{(N/FPSavg)} \\[2ex] Havg = \dfrac{1}{N}\sum_{j=i}^{i+N}\dfrac{1}{H_j} \\[2ex] Wavg = \dfrac{1}{N}\sum_{j}^{i+N}\dfrac{1}{W_j} \end{cases}$$

$$P1 = \frac{Bitrate}{Wavg \times Havg \times FPSavg} \tag{1}$$

With
FPSavg being the average frame rate expressed in frames per second;
Bitrate representing the average bit rate, expressed in bits per second
Havg representing the average frame height, expressed in numbers of pixels
Wavg representing the average frame width, expressed in numbers of pixels
Such that
P1 therefore corresponds to a mean compression ratio , which is an intrinsic parameter related to the video encoding over the time window.

A second parameter P2 is then derived from the display time DT of each frame and of the metric representing frozen frames Z over the window of time size L including frames Fi to Fi+N:

$$P2 = \frac{\sum_{j=i}^{i+N} Z_j \times DT_j}{L} \tag{2}$$

In this way P2 corresponds to a ratio between 0 and 1 of frozen frames over the total number of frames during the complete time window of length L. This thus also corresponds to a ratio of frozen seconds over the time window L.

This second parameter can thus be considered as a time discontinuity impairment indicator, related to network impairments during transmission of the encoded video

A third parameter P3 related to the video artifact propagation impairments ,brought by the network losses considering a specific buffer mode, is computed over the window of time size L including frames Fi to Fi+N, according to formula (3) :

$$P3 = \frac{1}{N} \sum_{j=i}^{i+N} E_j \tag{3}$$

P3 therefore corresponds to the ratio , between 0 and 1, of frames that are impaired by video artifacts with respect to the total number of frames received over the time window.

P3 can thus be considered as a degraded frame impairment indicator, related to packet losses during transmission of the encoded video.

A fourth parameter P4 , related to the activity/complexity of the video content, is computed over the window of time size L, including frames Fi to Fi+N, from the motion vector information in the following way, in accordance to formula (4):

$$SceneActivity_j = \frac{\frac{1}{NbMV_j} \sum_{(x,y)} \|MV(x,y)\|}{\sqrt{W_j^2 + H_j^2} \times DT_j}$$

where $NbMV_j$ is the number of motion vectors in the frame j

$$P4 = \frac{1}{N} \sum_{j=i}^{i+N} SceneActivity_j \tag{4}$$

P4 therefore corresponds to the average motion magnitude , representing the length of the motion vector, expressed in number of pixels, but normalized to the resolution and frame rate values.

P4 can thus also be considered as a video activity parameter.

In the embodiment depicted in Fig. 1, calculations of all 4 parameters P1 to P4 are shown to be performed in respective calculation modules denoted C1 to C4. However other embodiments exist where these calculations are performed by one single processing engine, or can even be combined or incorporated within the measurement means M.

These four parameters P1 to P4 are then further used for obtaining a single video quality score, denoted VQStotal, in the following way :

$$VQS_{total} = VQS_{video} - (VQS_{video} - 1)(P2^{\beta} + P3^{\gamma}) \tag{5}$$

Where VQSvideo represents the intrinsic video quality, and is a function of P1, P4 and of a parameter $\alpha$ as expressed by the following equation (6) :

$$VQS_{video} = \alpha \cdot f(P1, P4) \tag{6}$$

In an embodiment VQSvideo may lie within a range between 1 , meaning a bad quality, to 5 , representing an excellent quality, and VQSvideo thus relates to the intrinsic video quality of the stream , without being influenced by network impairments. This will be further explained in later paragraphs.

The term P2$^{\beta}$ can be considered as representative for the degradation of the quality due to freeze effects as a result of networks impairments

The term P3$^{\gamma}$ can be considered as corresponding to the degradation of the quality due to degraded frames as the consequence of e.g. packet losses

The Intrinsic video quality measure, VQSvideo, thus corresponded to (equation (6)) :

$$VQS_{video} = \alpha \cdot f(P1, P4)$$

With a function f that maps values of P1,P4 to a single quality score having the following form:

$$f(P1, P4) = \frac{P4 - P4_{News}}{P4_{Sport} - P4_{News}} G_{Sport}(P1) + \frac{P4 - P4_{Sport}}{P4_{Sport} - P4_{News}} G_{News}(P1) \qquad (7)$$

To obtain this function, an initializing step is performed where several test videos, eg. a first one containing News content and a second one containing Sport content are submitted to several encoding steps. These test videos are selected as being representative for a video with low activity on one hand, and another video showing a lot of activity on the other hand. Other and more videos may of course be selected. This selection can be done offline, thus at the receiver. The P1 parameter values as determined from measurements of all variants of encoded test videos are then calculated. All these variants of encoded versions of these test videos are also presented to a human audience, which will give their own subjective score relating to their own perceived quality. Gsport(P1) and Gnews(P1).are then obtained as fitting curves for these subjective human quality assessments of these variant encoding test videos, plotted as a function of these P1 values for all these variants.

Similarly P4 is obtained for the News and the Sports video or for the other selected variant videos. As P4 is only dependent on the video contents, thus not on the encoding process itself, there is no need to determine fitting curves for various encoded values of the test videos.

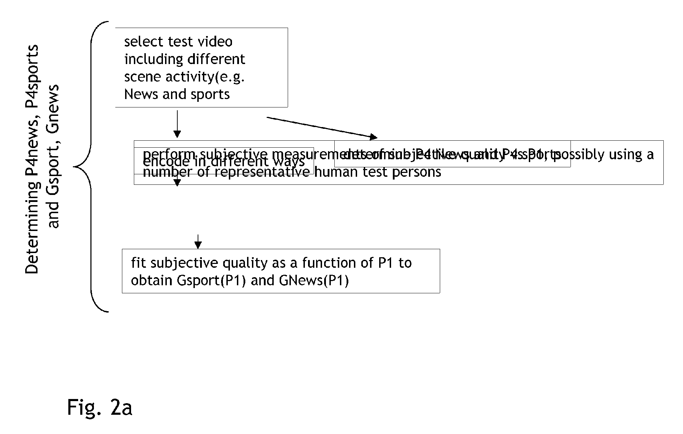

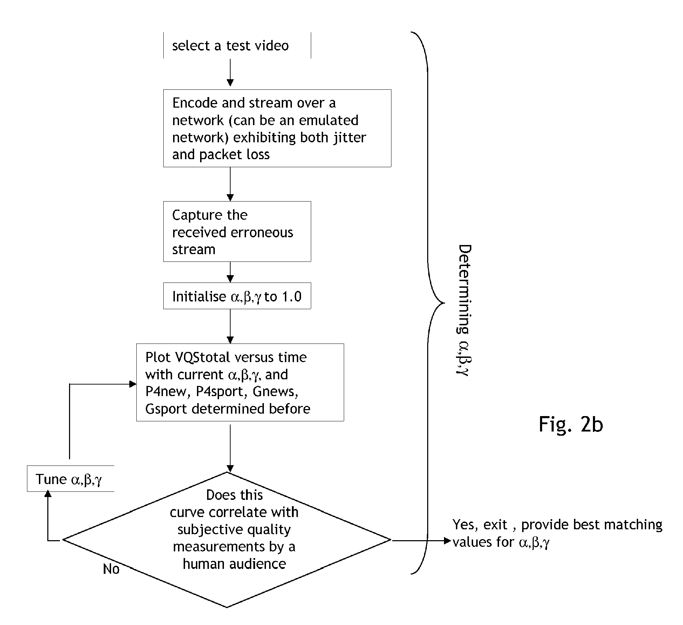

This is further illustrated in Fig. 2

Based on the obtained values of P4sport, P4News and the fitting curves Gsport(P1) and GNews(p1), the function f can then be determined, by means of equation (7).

The fitting curve G of the subjective quality measures with the different P1 values for the different variants of the sports and news video and their encoding variants, may be a complex function e.g. an exponential function of a high order polynomial, that is able to map the compression ratio to a single score subjective assessment. Gnews and Gsport function factors are thus computed offline and stored. Fitting algorithm are known to a person skilled in the art, e.g. linear or least mean square fitting algorithms can be used to obtain the fitting curve G.

P4sport and P4news that are average scene complexities are computed offline and stored.

In the embodiment depicted in Fig. 1 the calculation of VQSvideo from the 4 parameters P1 to P4, with the offline computed fitting parameters Gsport, Gnews, P4sport, P4news and another factor $\alpha$, which will be further explained in a next paragraph, is performed in a separate module denoted CVQS. However, in other embodiments this calculation can again be performed by means of one single processing module or software module.

As expressed by the equation (5), the total video quality metric VQStotal is obtained from the intrinsic video quality measure VQSvideo, which is however degraded due to freeze effects, as represented by subtracting the term -($VQS_{video}$-1)$P2^{\beta}$ from this intrinsic video quality measure VQSvideo. This term expresses the degradation of intrinsic quality due to freeze issues, thus due to time discontinuity impairments . The $\beta$ variable weighs the sensibility/subjective degradation of the end-users regarding freeze issues. $\beta$ can therefore be determined again via offline subjective assessment using a set of videos with different freeze patterns and duration, leading to different P2 values. This set of test videos for the determination of this $\beta$ variable is thus generally different from the set of test videos used for determining the variables used in equation (7).

The intrinsic video quality is also degraded due to video artifacts propagation, as represented by the term -($VQS_{video}$-1)$P3^{\gamma}$ which is subtracted from the intrinsic video quality. This term thus expresses the degradation of intrinsic quality due to video degraded frames as a result of e.g packet losses. The $\gamma$ variable weighs the sensibility/subjective degradation of the end-users regarding such video artifacts. $\gamma$ can be tuned in accordance to offline subjective assessments using a set of videos with different artifacts patterns and duration leading to different P3 values, by means of this human audience.

Based on these tuned values of $\beta$ and $\gamma$, the total video quality metric VQStotal can then be further obtained from the intrinsic single video quality measure VQSvideo and the values of P2, P3, in accordance to formula (5). In the embodiment depicted in Fig. 1 this is performed within another calculation module, denoted C5. However again other embodiments exist where all calculations can be performed together in one single calculation module.

In a similar way the value of the parameter $\alpha$ as used in equation (6) can also be obtained by offline tuning a subjective audience quality measure with the obtained results via the formula (6) . Several sets of test videos, can be thus be encoded and several packet loss and jitter effects are simulated.

These offline determinations for $\alpha,\beta,\gamma$ are illustrated in figs 2a-b. In these drawings only one test video is selected for determination of each parameter, but as mentioned, in more sophisticated embodiments a dedicated set of test videos can be selected for optimum tuning. The resulting VQStotal score is plotted as a function of time, enabling to follow the evolution of the quality over time. These test videos subjected to several conditions of emulated packet loss and jitter are also shown to a human audience, which will then give subjective scores on all as a function of time. One will then try to match the VQStotal curve as a function of.time. with the resulting subjective quality score. By iteratively adapting the different parameters $\alpha,\beta,\gamma$, until an acceptable matching is obtained between the metric and the subjective quality score, optimum fitting values for these 3 parameters will be obtained.

$\alpha$ thereby relates to the intrinsic quality itself, whereas $\beta$ relates to freeze degradation, and $\gamma$ relates to artifacts degradation . In practice, these parameters are thus tuned to get a subjectively "correct" response of the VQStotal.

Typical values for these 3 parameters are that $\alpha$ is set to 1, $\beta$ to 0.5 , and $\gamma$ to 0.3. This means that degradation due to these artifacts is considered to be more important than degradation related to freeze effects , as was observed from these human perception studies.

Until now the method has only been described for being performed within a receiver. However embodiments of the methods can as well be performed in any intermediate node within the communications network between the transmitter and the receiver. This may add to understand how the quality is further degraded downstream of the transmitter , if several successive of these intermediate nodes are adapted to implement the method.

Embodiments of the method can be performed by means of dedicated hardware and/of software or any combination of both.

While the principles of the invention have been described above in connection with specific apparatus, it is to be clearly understood that this description is made only by way of example and not as a limitation on the scope of the invention, as defined in the appended claims.

## Claims

1. Method for assessing the quality of an encoded video stream, said method comprising the steps of performing measurements of said video stream for deriving therefrom a mean compression ratio parameter (P1) of the video stream, a time discontinuity impairment indicator (P2), a degraded frame impairment indicator (P3) related to packet losses during transmission of said encoded video, and a video activity parameter (P4), said mean compression ratio parameter (P1), said time discontinuity impairment indicator (P2), said degraded frame impairment indicator (P3) and said video activity parameter (P4) being further used to during calculation of a single quality metric (VQStotal) of which the resulting value is representative for the quality of said encoded video stream.

2. Method according to claim 1 wherein said measurements comprise the tracking , during at least one predetermined timing window ,of

   - a compressed video frame size (S)
   - a frame resolution (WxH),
   - an instantaneous frame display time (DT),
   - a number of frames that are displayed longer than expected (Z),
   - a number of frames that are visually degraded (E),
   - a motion vector (MV).

3. Method according to claim 2 wherein said predetermined timing window corresponds to a timing window for receiving a predetermined number of encoded frames of said encoded video stream

4. Method according to any of the claims 1 to 3 wherein said measurements are performed at a receiver (RX).

5. Method according to any of the claims 1 or 3 wherein said measurements are performed in an intermediate node between a transmitter (TX) and a receiver (RX).

**6.** Method according to claim 1, wherein said single video quality metric (VQStotal) is obtained by subtracting a first degradation term $((VQSvideo-1)P2^{\beta})$ expressing a degradation of an intrinsic video quality measure (VQSvideo) from time discontinuity impairments and a second degradation term $((VQSvideo-1)P3^{\gamma})$ expressing a degradataion of said intrinsic video quality measure (VQSvideo) due to degraded frames .

**7.** Method according to claim 6 wherein said intrinsic video quality measure (VQSvideo) is a function of said mean compression ratio parameter (P1) and said video activity parameter (P4).

**8.** Method according to the previous claim 7 further comprising a step of calibrating said function via initial measurements on several test video sequences .

**9.** Method according to claim 6 further comprising a step of calibrating said degradation terms by initial measurements on a second plurality of video test sequences.

**10.** Computer program comprising software to perform the steps of the method in accordance to any of the claims 1 to 9.

**11.** Apparatus comprising means for carrying out the method in accordance to any of the claims 1 to 9.

Fig. 1

Determining P4news, P4sports
and Gsport, Gnews

select test video
including different
scene activity(e.g.
News and sports

encode in different ways

perform subjective measurement of subjective quality P4sport, P4News, possibly using a number of representative human test persons

fit subjective quality as a function of P1 to obtain Gsport(P1) and GNews(P1)

Fig. 2a

select a test video

Encode and stream over a
network (can be an emulated
network) exhibiting both jitter
and packet loss

Capture the
received erroneous
stream

Initialise $\alpha,\beta,\gamma$ to 1.0

Plot VQStotal versus time
with current $\alpha,\beta,\gamma$, and
P4new, P4sport, Gnews,
Gsport determined before

Tune $\alpha,\beta,\gamma$

Does this
curve correlate with
subjective quality
measurements by a
human audience

No

Yes, exit , provide best matching
values for $\alpha,\beta,\gamma$

Determining $\alpha,\beta,\gamma$

Fig. 2b

Europäisches
Patentamt

European
Patent Office

Office européen
des brevets

# EUROPEAN SEARCH REPORT

Application Number

EP 10 30 5675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 106 153 A1 (DEUTSCHE TELEKOM AG [DE]; UNIV BERLIN TECH [DE]) 30 September 2009 (2009-09-30) * paragraphs [0001] - [0008] * * paragraphs [0023] - [0059] * * figure 1 * | 1-11 | INV. H04N7/26 H04N7/50 G06T7/00 H04N17/00 |
| X | US 2010/110199 A1 (WINKLER STEFAN [US] ET AL) 6 May 2010 (2010-05-06) * figures 2,3 * * paragraphs [0007] - [0013] * * paragraphs [0022] - [0037] * | 1-11 | |
| X | WINKLER S ET AL: "The Evolution of Video Quality Measurement: From PSNR to Hybrid Metrics" IEEE TRANSACTIONS ON BROADCASTING, vol. 54, no. 3, 1 September 2008 (2008-09-01), pages 660-668, XP011229276 IEEE SERVICE CENTER, PISCATAWAY, NJ, US ISSN: 0018-9316 DOI: 10.1109/TBC.2008.2000733 * abstract * pages 661-662, sections III-III.C pages 663-664, section IV | 1-11 | |

-/--

TECHNICAL FIELDS
SEARCHED (IPC)

H04N
G06T

The present search report has been drawn up for all claims

| Place of search | Date of completion of the search | Examiner |
|---|---|---|
| The Hague | 17 November 2010 | André, Thomas |

EPO FORM 1503 03.82 (P04C01)

Europäisches
Patentamt

European
Patent Office

Office européen
des brevets

# EUROPEAN SEARCH REPORT

**Application Number**

EP 10 30 5675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENGELKE U ET AL: "Perceptual-based Quality Metrics for Image and Video Services: A Survey" 3RD EURONGI CONFERENCE ON NEXT GENERATION INTERNET NETWORKS,, 1 May 2007 (2007-05-01), pages 190-197, XP031176445 DOI: DOI:10.1109/NGI.2007.371215 ISBN: 978-1-4244-0856-6 page 190, section I page 191, section II.B pages 191-192, section III, first paragraph * table I * page 193, left-hand column, second paragraph - page 194, left-hand column, second paragraph | 1-11 | |
| A | PASTRANA-VIDAL, R. ET AL.: "Automatic quality assessment of video fluidity impairments using a no-reference metric" VPQM 2006 SECOND INTERNATIONAL WORKSHOP ON VIDEO PROCESSING AND QUALITY METRICS FOR CONSUMER ELECTRONICS, January 2006 (2006-01), XP002609870 pages 1-3, sections 1-3 page 4, section 4.3 | 1-11 | TECHNICAL FIELDS SEARCHED (IPC) |
| A | EP 1 727 375 A1 (PSYTECHNICS LTD [GB]) 29 November 2006 (2006-11-29) * paragraphs [0001] - [0014] * * paragraphs [0018] - [0037] * | 1-11 | |

-/--

The present search report has been drawn up for all claims

| Place of search | Date of completion of the search | Examiner |
|---|---|---|
| The Hague | 17 November 2010 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 30 5675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAI-CHIEH YANG ET AL: "Perceptual Temporal Quality Metric for Compressed Video" IEEE TRANSACTIONS ON MULTIMEDIA, IEEE SERVICE CENTER, PISCATAWAY, NJ, US, vol. 9, no. 7, 1 November 2007 (2007-11-01), pages 1528-1535, XP011194488 ISSN: 1520-9210 DOI: 10.1109/TMM.2007.906576 pages 1528-1529, section I page 1529, section III, first paragraph pages 1529-1532, sections IV.A-IV.E | 1-11 | |
| A | RIES, M ET AL.: "Reference free video quality metric for mobile streaming applications"[Online] December 2005 (2005-12), XP002609871 PROC. OF THE DSPCS 05 & WITSP05 Retrieved from the Internet: URL:http://publik.tuwien.ac.at/files/pub-e t_10016.pdf> [retrieved on 2010-11-17] * the whole document * | 1-11 | |
| A | MICHAL RIES ET AL: "Motion Based Reference-Free Quality Estimation for H.264/AVC Video Streaming" WIRELESS PERVASIVE COMPUTING, 2007. ISWPC '07. 2ND INTERNATIONAL SYMPOSIUM ON, IEEE, PI, 1 February 2007 (2007-02-01), pages 355-359, XP031072463 ISBN: 978-1-4244-0522-0 * the whole document * | 1-11 | TECHNICAL FIELDS SEARCHED (IPC) |

The present search report has been drawn up for all claims

| Place of search | Date of completion of the search | Examiner |
|---|---|---|
| The Hague | 17 November 2010 | André, Thomas |

EPO FORM 1503 03.82 (P04C01)

## ANNEX TO THE EUROPEAN SEARCH REPORT
## ON EUROPEAN PATENT APPLICATION NO.

EP 10 30 5675

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2010

| Patent document cited in search report | | Publication date | Patent family member(s) | | Publication date |
|---|---|---|---|---|---|
| EP 2106153 | A1 | 30-09-2009 | EP<br>US | 2106154 A1<br>2009244289 A1 | 30-09-2009<br>01-10-2009 |
| US 2010110199 | A1 | 06-05-2010 | NONE | | |
| EP 1727375 | A1 | 29-11-2006 | US | 2007133608 A1 | 14-06-2007 |

EPO FORM P0459

## REFERENCES CITED IN THE DESCRIPTION

**Patent documents cited in the description**

- FR 1050849